# EUROPÄISCHE PATENTSCHRIFT

(11) **EP 2 251 679 B1**
(45) Veröffentlichungstag und Bekanntmachung des Hinweises auf die Patenterteilung: **24.10.2012**
(21) Anmeldenummer: 09006331.4
(22) Anmeldetag: 11.05.2009
(51) Int. Cl.: G01N 22/04

(54) **Vorrichtung und Verfahren zur Messung einer Produkteigenschaft mittels einer Mikrowellen-Streufeldsensoranordnung**
Device and method for measuring a product characteristic with a microwave dispersion range sensor assembly
Dispositif et procédé de mesure d'une caractéristique de produit à l'aide d'un agencement de capteur de champ de dispersion à micro-ondes

(43) Veröffentlichungstag der Anmeldung: 17.11.2010
(73) Patentinhaber: AMS- Advanced Microwave Systems GmbH, 22761 Hamburg (DE)
(72) Erfinder: Knöchel, Reinhard, 25336 Elmshorn (DE); Taute, Wolfgang, 24235 Laboe (DE); Döscher, Claas, 20253 Hamburg (DE)
(74) Vertreter: Müller Verweyen

(56) Entgegenhaltungen:
- EP-A- 1 321 564
- EP-A- 1 437 588
- WO-A-2009/030314
- DE-A1- 4 004 119
- DE-B3-102005 013 647
- DE-U1-202005 010 375
- REINHARD KNÖCHEL ET AL: "Stray field ring resonators and a novel trough guide resonator for precise microwave moisture and density measurements; Stray field ring resonators for microwave moisture and density measurements" MEASUREMENT SCIENCE AND TECHNOLOGY, IOP, BRISTOL, GB, Bd. 18, Nr. 4, 1. April 2007 (2007-04-01), Seiten 1061-1068, XP020118588 ISSN: 0957-0233

## Beschreibung

Die Erfindung betrifft eine Vorrichtung und ein Verfahren zur Messung einer Eigenschaft, insbesondere der Feuchte, Dichte und/oder Masse, eines Produkts mittels einer Mikrowellen-Streufeldsensoranordnung.

Vorrichtungen und -verfahren zur Messung einer Produkteigenschaft mittels einer Mikrowellen-Streufeldsensoranordnung sind bekannt, siehe EP 1 437 588 B1 und R. Knöchel, in: K. Kupfer, "Materialfeuchtemessung", expert Verlag 1997, S. 145-154, 165-172. Es ist dabei seit langem bekannt, siehe DE 29 28 487 A1, aus der Frequenzverschiebung und der Änderung der Güte bzw. der Dämpfung einer untersuchten Resonanzkurve des belasteten Resonators gegenüber dem unbelasteten Resonator eine dichteunabhängige, nur von der Materialfeuchte abhängige Messgröße zu bestimmen. Diese Messgröße weist jedoch aus physikalischen Gründen in Abhängigkeit von der Feuchte einen Extremalwert auf, so dass das Verfahren nur bei Produktfeuchten unterhalb der dem Extremalwert entsprechenden Feuchte eindeutig ist. In der Praxis ist das beschriebene hochgenaue Verfahren daher auf Materialfeuchten bis maximal etwa 20% beschränkt.

Aus der WO 2009 030314 A1 ist eine Messvorrichtung bekannt, wobei für mindestens zwei Resonanzmoden mit voneinander verschiedenen Resonanzfrequenzen jeweils eine Verschiebung der Resonanzfrequenz ausgewertet und daraus ein dichteunabhängiger Feuchtewert berechnet wird. Da die Resonanzfrequenzverschiebung über der Frequenz jedoch im Vergleich zu dem zuvor beschriebenen Verfahren weniger empfindlich von der Feuchte abhängt, ist die Messgenauigkeit bei diesem Verfahren signifikant reduziert.

DE 40 04 119 A1 offenbart ein Verfahren, um aus der Frequenzverschiebung und der Änderung der Güte bzw. der Dämpfung einer untersuchten Resonanzkurve des belasteten Resonators gegenüber dem unbelasteten Resonator eine dichteunabhängige, nur von der Materialfeuchte abhängige Messgröße zu bestimmen. Erwähnt ist ferner die Möglichkeit, zur Überwindung einer Zweideutigkeit in der Zuordnung der Messgröße zu der Materialfeuchte gleichzeitig bei zwei oder mehr Frequenzen das Resonanzverhalten zu messen. In einem Ausführungsbeispiel ist eine Messung an Parmesan-Käse bei 2.1 GHz und 2.6 GHz offenbart. Beim Nachmessen dieses Ausführungsbeispiels hat sich jedoch gezeigt, dass eine Überwindung der Zweideutigkeit in der Zuordnung der Messgröße zu der Materialfeuchte in der beschriebenen Weise nicht möglich ist.

DE 10 2005 013 647 B3 offenbart ein Verfahren zur Messung der Materialfeuchte eines Messgutes mithilfe eines Mikrowellenresonators, wobei die Messung in einer Resonanzfrequenz des Resonators beispielsweise bei 2.45 GHz durchgeführt wird.

Die Aufgabe der Erfindung besteht darin, eine Messvorrichtung und ein Messverfahren bereitzustellen, die mit einfachen Mitteln die Messung einer Produkteigenschaft mit hoher Messgenauigkeit über einen großen Feuchtebereich ermöglichen.

Die Erfindung löst diese Aufgabe mit den Mitteln der unabhängigen Ansprüche. Es hat sich herausgestellt, dass bei der erfindungsgemäßen Ermittlung der Produkteigenschaft in Abhängigkeit mindestens eines mit der Dämpfung der ersten Arbeitsmode zusammenhängenden Messwerts und eines mit der Dämpfung der zweiten Arbeitsmode zusammenhängenden Messwerts auch noch bei signifikant höheren Feuchtewerten eine monotone Abhängigkeit von der Feuchte besteht und daher eine eindeutige Messung für Produktfeuchten über 20% hinaus möglich ist. Da die Dämpfungsänderung über der Frequenz sehr empfindlich von der Feuchte abhängt, ist die Ausdehnung des Messbereichs auf Feuchten über 20% im Wesentlichen ohne Einbußen bei der Messgenauigkeit möglich. Dies ist für die erfindungsgemäße Streufeldsensoranordnung überraschend, weil hier Mikrowellenverluste durch Abstrahlung in das Fernfeld in der Regel nicht vernachlässigbar sind und sich hauptsächlich durch eine Zunahme der Breite der Resonanzkurve auswirken. Dies hat in der Fachwelt zu der Annahme geführt, dass die Auswertung von mit der Dämpfung zusammenhängenden Messwerten für eine Streufeldsensoranordnung zu erheblichen Messfehlern führt, siehe WO 2009 030314 A1, Seiten 31/32 überbrückender Absatz. Erfindungsgemäß hat sich jedoch herausgestellt, dass dies keineswegs der Fall sein muss, insbesondere wenn Abstrahlungsverluste mit anderen Mitteln, beispielsweise einem geeigneten Aufbau der Streufeldsensoranordnung, in Grenzen gehalten werden können.

Ein mit der Dämpfung einer Arbeitsmode zusammenhängender Messwert kann eine Breite, eine Amplitude der Resonanzkurve, eine Steigung in einer Flanke der Resonanzkurve, eine geeignete Kombination daraus, oder ein sonstiger von der Frequenzverschiebung unabhängiger Messwert sein, der eine Änderung der Resonanzkurve geeignet charakterisiert. Mit der Mikrowellendämpfung zusammenhängende Messwerte können einfach und schnell beispielsweise mittels zweier Schwingkreise, die mit unterschiedlichen Eigenfrequenzen schwingen, und Messung der Schwingungsamplituden, bestimmt werden. Eine aufwendige Frequenzabtastung ist daher für die Umsetzung der Erfindung nicht zwingend erforderlich.

Bei der zu bestimmenden Produkteigenschaft kann es sich beispielsweise sich um die Feuchte, Dichte und/oder Masse des Produkts handeln. Aufgrund der Bestimmung mindestens zweier unabhängiger Messwerte, nämlich der mit der Dämpfung der Arbeitsmoden zusammenhängenden Messwerte, kann insbesondere ein von der Dichte unabhängiger Feuchtewert und/oder ein von der Feuchte unabhängiger Dichtewert bestimmt werden. Die Erfindung lässt sich ohne Weiteres auf die Bestimmung einer anderen Substanz in einem Produkt übertragen.

Die Erfindung kann vorzugsweise zur Messung an einem strang-, stab-, oder tablettenförmigen Produkt dienen. Eine bevorzugte Anwendung betrifft die Online-Messung an einem in einer Produktbehandlungsvorrichtung, insbesondere einem Trockner, beispielsweise einem Wirbelschichttrockner, behandelten Produkt. Die Erfindung umfasst daher die bevorzugte Kombination einer Messvorrichtung mit einer Produktbehandlungsvorrichtung und vorzugsweise die Steuerung und/oder Regelung der Produktbehandlungsvorrichtung in Abhängigkeit eines von der Messvorrichtung bereitgestellten Messergebnisses. Die Erfindung ist aber nicht auf eine spezifische Produktbehandlung, insbesondere Trocknung, beschränkt, sondern in anderen Produktverarbeitungs-/-handhabungs-/-herstellungsverfahren und -vorrichtungen anwendbar.

Erfindungsgemäß werden sämtliche Arbeitsmoden von einem in dem Produktraum angeordneten Produkt beeinflusst. Dies bedeutet einerseits, dass keine Arbeitsmode gegenüber dem Produktraum abgeschirmt ist, so dass die Mikrowellenfelder sämtlicher Arbeitsmoden in das Produkt eindringen. Des Weiteren sind die Arbeitsmoden insbesondere so gewählt, dass jede Arbeitsmode eine signifikante Mikrowellendämpfung und Resonanzfrequenzverschiebung infolge der Kopplung an das Produkt erfährt. Damit ist die Erfindung abgegrenzt gegenüber solchen herkömmlichen Messvorrichtungen, bei denen eine Mode (Leermode) so gewählt ist, dass sie im Wesentlichen nicht an das Produkt koppelt und daher im Wesentlichen keine Mikrowellendämpfung und Resonanzfrequenzverschiebung erfährt. Eine solche Leermode kann nützlich sein, um nicht von dem Produkt hervorgerufene Einflüsse auf das Messsignal zu kompensieren, jedoch kann eine Leermode gerade aufgrund der fehlenden Kopplung zum Produkt grundsätzlich keinen Beitrag zur Bestimmung einer Produkteigenschaft leisten.

Die Erfindung betrifft die Messung einer Produkteigenschaft mittels mindestens eines Streufeldsensors, der mindestens einen Streufeldresonator aufweist. Ein Streufeldresonator ist ein offener Resonator, wobei in dem Resonator erzeugte Mikrowellen durch eine Resonatoröffnung in den Produktraum austreten, um mit einem in dem Produktraum befindlichen Produkt in Wechselwirkung zu treten. Bei einem Streufeldresonator ist der Produktraum außerhalb des Resonators angeordnet bzw. wird von diesem nicht umschlossen. Bei einem ringförmigen streufeldresonator läuft das Produkt nicht durch den Ring hindurch, sondern etwa senkrecht zur Ringachse an dem Ring entlang.

Die verwendeten Mikrowellenfrequenzen liegen vorzugsweise im Bereich oberhalb von 10 MHz, weiter vorzugsweise oberhalb von 100 MHz, weiter vorzugsweise oberhalb von 1 GHz, um den Einfluss der ionischen Leitfähigkeit auf das Messsignal zu reduzieren bzw. im Wesentlichen ausschließen zu können.

Die verwendeten Mikrowellenfrequenzen liegen erfindungsgemäß im Bereich unter 50 GHz, vorzugsweise unter 30 GHz, weiter vorzugsweise unter der Relaxationsfrequenz von freiem Wasser, d.h. unterhalb von 22 GHz, weil bei höheren Frequenzen die Frequenzabhängigkeit mit der Dämpfung zusammenhängender Messwerte abnimmt.

Erfindungsgemäß weisen die Arbeitsmoden einen Frequenzabstand von mindestens 1 GHz, vorzugsweise mindestens 3 GHz auf, um einen möglichst großen Unterschied in der Frequenzabhängigkeit der Messwerte beider Arbeitsmoden und damit eine möglichst große Messempfindlichkeit zu erhalten.

Erfindungsgemäß liegt die Frequenz mindestens einer Arbeitsmode oberhalb von 3.5 GHz. Vorzugsweise liegt die Frequenz mindestens einer Arbeitsmode oberhalb von 5 GHz, weiter vorzugsweise oberhalb von 7 GHz, da sich gezeigt hat, dass in diesen höheren Frequenzbereichen je nach Bindungszustand des Wassers in dem zu messenden Material eine ausgeprägte Frequenzabhängigkeit mit der Dämpfung zusammenhängender Messwerte vorliegt.

Vorzugsweise liegt die Frequenz mindestens einer Arbeitsmode vorzugsweise unterhalb von 7 GHz, weiter vorzugsweise unterhalb von 5 GHz, weiter vorzugsweise unterhalb von 3.5 GHz, um eine möglichst genaue Messung bei niedrigen Feuchten zu ermöglichen.

Vorzugsweise beträgt die Resonanzfrequenz einer Arbeitsmode ein ganzzahliges Vielfaches der Resonanzfrequenz der anderen Arbeitsmode, was die Erzeugung der Arbeitsmoden vereinfachen kann, insbesondere indem eine Grundmode und daraus und eine höhere Mode durch Frequenzvervielfachung erzeugt wird.

Vorzugsweise ist die Auswerteeinrichtung zur Ermittlung von Produktfeuchten von mehr als 20%, vorzugsweise mehr als 30%, weiter vorzugsweise mehr als 40%, aus den mit der Dämpfung zusammenhängenden Messwerten eingerichtet, um die schnelle und genaue Bestimmung der Produkteigenschaft bis zu hohen Produktfeuchten zu ermöglichen. Zu diesem Zweck sind in der Auswerteeinrichtung zweckmäßigerweise aus Kalibriermessungen gewonnene Kurven gespeichert, die einen Zusammenhang der zu bestimmenden Produkteigenschaft und einer aus den Messwerten berechneten Messgröße über einen Feuchtebereich von 0% bis über 20%, vorzugsweise bis über 30%, weiter vorzugsweise bis über 40% angeben. Herkömmlicherweise überdecken solche aus Kalibrierungsmessungen gewonnene Kurven nur einen Feuchtebereich von 0% bis maximal 20%.

Vorzugsweise kann die Auswerteeinrichtung zur Ermittlung der Produkteigenschaft in zusätzlicher Abhängigkeit von der Frequenzverschiebung einer Arbeitsmode oder beider Arbeitsmoden eingerichtet sein. Hierdurch kann die Messgenauigkeit unter Umständen noch gesteigert werden.

Die Erfindung wird im Folgenden anhand vorteilhafter Ausführungsformen unter Bezugnahme auf die beigefügten Figuren erläutert. Dabei zeigt:
- Fig. 1:: eine schematische Darstellung einer Messvorrichtung mit einem Mikrowellen-Streufeldsensor im Querschnitt;
- Fig. 2:: eine Draufsicht auf die Messseite 27 des Mikrowellen- Streufeldsensors aus Fig. 1;
- Fig. 3-5:: Frequenzspektren des Ausgangssignals des Mikrowellen- Streufeldsensors aus Fig. 1; und
- Fig. 6:: eine schematische Querschnittsansicht eines Mikrowel- len-Streufeldsensors in einer alternativen Ausfüh- rungsform.

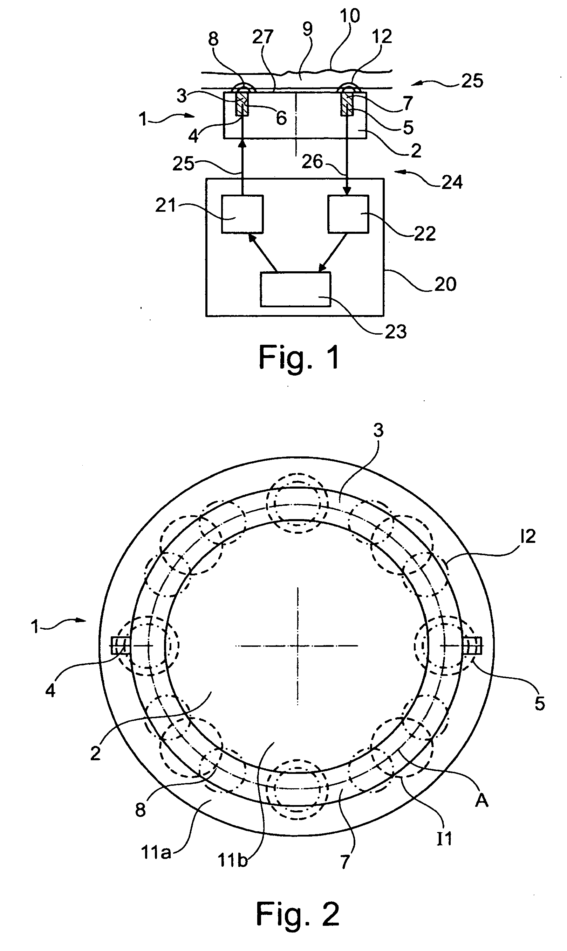

Die Messvorrichtung 24 umfasst eine Steuer-/Auswerteeinheit 20 und eine Mikrowellen-Streufeldsensoranordnung 25. In dem Ausführungsbeispiel gemäß den Figuren 1 und 2 umfasst die Mikrowellen-Streufeldsensoranordnung 25 einen Mikrowellen-Streufeldsensor 1, der einen Mikrowellenresonator 7 aufweist.

Der Streufeldsensor 1 besteht im Wesentlichen aus einem Träger 2, der eine ringförmige, im Querschnitt insbesondere rechteckige Nut 6 aufweist, in die vorzugsweise ein ringförmiges Dielektrikum 3 eingepasst ist. Die Nut 6 bzw. das darin eingelegte Dielektrikum 3 bilden in diesem Fall den Mikrowellenresonator 7. Zur Begrenzung des Mikrowellenfeldes auf die Nut 6 bzw. das Dielektrikum 3, abgesehen von der Messseite 27, kann der Träger 2 aus Metall, beispielsweise Edelstahl, bestehen, oder die die Nut 6 bildenden Wände des Trägers 2 können metallisiert sein, oder die Oberflächen des Dielektrikums 3 bis auf die Messseite können metallisiert sein. Die messseitigen Oberflächen 11a, 11b des Trägers 2 und die messseitige Oberfläche 8 des Dielektrikums 3 bilden eine durchgängige ebene Messfläche 27. Der Sensor 1 ist daher ein Planarsensor.

Verallgemeinert ist der Mikrowellenresonator 7 vorzugsweise mit einem Dielektrikum 3 gefüllt, das zur Reduzierung von Abstrahlungsverlusten vorzugsweise eine Dielektrizitätszahl von mindestens 1.5, vorzugsweise mindestens drei, weiter vorzugsweise mindestens fünf aufweist. Das Dielektrikum 3 besteht beispielsweise aus Aluminiumoxid oder einer anderen keramischen Substanz.

Mikrowellen werden in einer Mikrowellenerzeugungseinrichtung 21, die von einer elektronischen Steuer-/Auswerteeinrichtung 23 mittels Software gesteuert sein kann, erzeugt. Die programmierbare elektronische Steuer-/Auswerteeinrichtung 23 umfasst insbesondere einen Mikroprozessor oder Mikrocontroller. Die Mikrowellenerzeugungseinrichtung 21 ist zur Erzeugung von Mikrowellen mit Frequenzen über 10 MHz, insbesondere im GHz-Bereich, eingerichtet. Insbesondere werden Mikrowellen mindestens zweier unterschiedlicher Frequenzen erzeugt, die einen Frequenzabstand von mindestens 1 GHz aufweisen und auf entsprechende Eigenfrequenzen des Mikrowellenresonators 7 abgestimmt sind. Zu diesem Zweck kann die Mikrowellenerzeugungseinrichtung 21 entweder eine Mehrzahl von Mikrowellengeneratoren aufweisen, oder beispielsweise einen Mikrowellengenerator zur Erzeugung einer Grundfrequenz und Einrichtungen zur Erzeugung einer weiteren Frequenz aus der Grundfrequenz. Eine der Arbeitsfrequenzen liegt vorzugsweise im Bereich von 2 GHz bis 7 GHz und die andere Arbeitsfrequenz liegt vorzugsweise im Bereich von 5 GHz bis 22 GHz. Die Ar-beitsmoden können gleichzeitig in der Streufeldsensoranordnung 25 erzeugt werden. Alternativ können die Arbeitsmoden ständig alternierend erzeugt werden, so dass zu jedem Zeitpunkt jeweils nur eine Arbeitsmode vorliegt.

Die in der Mikrowellenerzeugungseinrichtung 21 erzeugten Mikrowellen werden über eine Mikrowellenleitung 25 zu dem Streufeldsensor 1 geleitet und einen entsprechenden Anschluss 4 in den Mikrowellenresonator 7 eingekoppelt. Aufgrund der Frequenzabstimmung des eingespeisten Mikrowellenfeldes auf bestimmte Eigenfrequenzen des Resonators 7 bilden sich in dem Resonator 7 stehende Mikrowellenfelder aus.

In dem in Figur 2 gezeigten Beispiel führt die Einspeisung eines Mikrowellenfeldes mit einer ersten Frequenz zur Ausbildung von beispielsweise vier Wellenlängen entlang der Längsachse A des Ringresonators 7 (erste Arbeitsmode); die den acht Halbwellen entsprechenden Intensitätsmaxima I1, d.h. die Bereiche I1, in denen die Intensität beispielsweise größer als 50% des Maximalwerts ist, sind hier als gestrichelt umrissene Kreise angedeutet. Die Einspeisung eines Mikrowellenfeldes mit einer zweiten Frequenz führt zur Ausbildung von sechs Wellenlängen entlang der Längsachse A des Ringresonators 7 (zweite Arbeitsmode); die den zwölf Halbwellen entsprechenden Intensitätsmaxima I2, d.h. die Bereiche I2, in denen die Intensität beispielsweise größer als 50% des Maximalwerts ist, sind als strichpunktiert umrissene Kreise angedeutet. Im Allgemeinen sind die Frequenzen des Mikrowellenfeldes auf die Ausbildung von n1, n2 (gegebenenfalls n3, ...) Wellenlängen entlang dem Ringresonator 7 abgestimmt, wobei n1, n2 (gegebenenfalls n3, ...) unterschiedliche ganze Zahlen größer oder gleich eins, im Hinblick auf eine reduzierte Mikrowellenabstrahlung vorzugsweise größer oder gleich drei, weiter vorzugsweise größer oder gleich fünf sind.

Die Tiefe, Breite und gegebenenfalls Form der Nut 6 ist so gewählt, dass die Nut 6 einen Kompromiss hinsichtlich der optimalen Ausbreitung der ersten Arbeitsmode und der zweiten Arbeitsmode in dem Resonator 7 darstellt.

Im Bereich der Intensitätsmaxima I1, I2 erstreckt sich das Mikrowellenfeld durch die Austrittsoberfläche, d.h. die dem Produktraum zugewandte Oberfläche 8 des Dielektrikums 3, in den Produktraum 9. Einige Feldlinien 12 des Mikrowellenstreufelds sind in Fig. 1 angedeutet. Zur Messung einer Eigenschaft eines Produkts 10 wird dieses in dem Produktraum 9 angeordnet bzw. an der Messoberfläche des Sensors 1 vorbeigeführt. Insbesondere ist die Messanordnung 24 zur kontinuierlichen Messung an einem kontinuierlich an der Messoberfläche des Sensors 1 vorbeigeführten Produkts 10 eingerichtet. Das Produkt 10 ist ein beliebiges festes oder flüssiges Gut, das grundsätzlich beliebig im Produktraum 9 orientiert sein kann.

Über einen Mikrowellenanschluss 5 wird eine Mikrowellensignal aus dem Resonator 7 ausgekoppelt und über eine Mikrowellenleitung 26 einem Analysator 22 zugeführt, dessen Ausgangssignal von der Steuer-/Auswerteeinrichtung 23 verarbeitet bzw. ausgewertet wird. Die Mikrowellenerzeugungseinrichtung 21, der Analysator 22 und die Steuer-/Auswerteeinrichtung 23 können in einer Steuer-/Auswerteeinheit 20 zusammengefasst sein. Die Wechselwirkung des Mikrowellenstreufelds mit dem Produkt 10 verursacht eine Veränderung des ausgekoppelten Mikrowellensignals, aus dem durch geeignete Auswertung mindestens eine mit der zu bestimmenden Produkteigenschaft korrelierende Messgröße M; M1, M2 ermittelt werden kann, wie im folgenden erläutert wird.

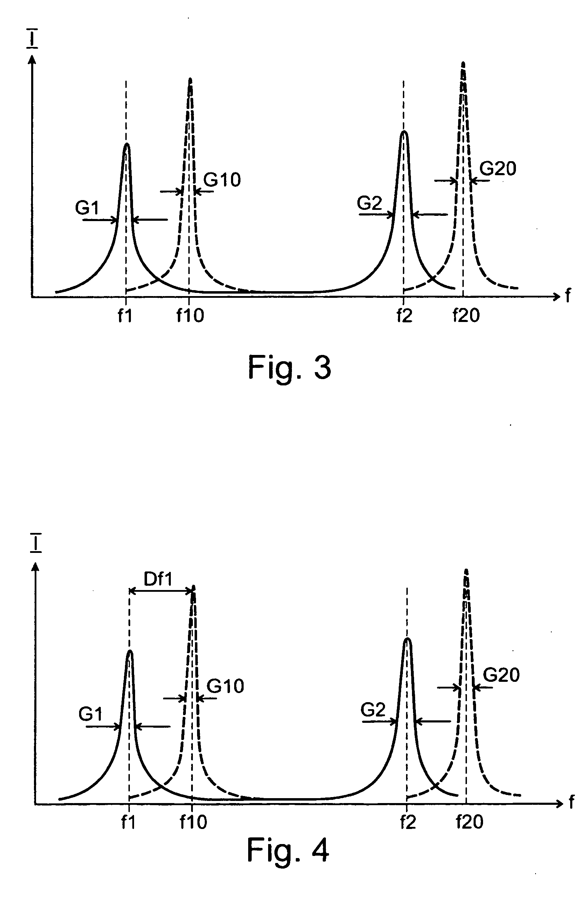

In Fig. 3 ist ein Intensitätsspektrum des ausgekoppelten Mikrowellenfeldes über der Frequenz dargestellt, das beispielsweise dem in Fig. 2 gezeigten Mikrowellenfeld entsprechen kann. Die durchgezogene Kurve gibt das eigentliche Messsignal an dem mit dem Produkt 10 belasteten Mikrowellenresonator 7 wieder. Die gestrichelt dargestellte Kurve entspricht einer Leermessung mit unbelastetem Mikrowellenresonator 7 und ist hier nur zum besseren Verständnis gezeigt. Leerwerte, beispielsweise die Halbwertsbreiten G10, G20 oder die Frequenzen f10, f20, können in Leermessungen vor dem eigentlichen Messvorgang ermittelt und beispielsweise in Form von Temperaturprofilen hinterlegt werden, um dann während der Messung abrufbar zu sein.

Wie aus Fig. 3 ersichtlich, sind beide Resonanzkurven des belasteten Resonators 7 gegenüber den jeweiligen Resonanzkurven des unbelasteten Resonators 7 zu niedrigeren Frequenzen verschoben und weisen aufgrund der Mikrowellendämpfung durch das Produkt größere Breiten sowie geringere Amplituden auf. Die Steuer-/Auswerteeinrichtung 23 ist nun zur Bestimmung eines mit der Mikrowellendämpfung der ersten Arbeitsmode zusammenhängenden Messwerts G1 und eines mit der Mikrowellendämpfung der zweiten Arbeitsmode zusammenhängenden Messwerts G2 eingerichtet. Im vorliegenden Beispiel handelt es sich um die Halbwertsbreiten, es kann sich aber auch um eine andere Breite, eine Amplitude, eine Flankensteigung, eine Kombination daraus, oder eine andere geeignete Größe handeln. In dem Ausführungsbeispiel gemäß Figur 3 kann dabei auf eine Auswertung bzw. Bestimmung der Frequenzverschiebungen Df1=f₁-f₁₀ und Df2=f₂-f₂₀ der belasteten Resonanzkurven relativ zu den unbelasteten Resonanzkurven vorteilhafterweise verzichtet werden. Zweckmäßigerweise ist die Steuer-/Auswerteeinheit 23 zur Ansteuerung der Mikrowellenerzeugungseinrichtung 21 zur Durchführung von Scans über entsprechende Frequenzbereiche in den Resonanzkurven eingerichtet, die zur Ermittlung der Messgrößen, hier der Halbwertsbreiten, ausreichen.

Die Steuer-/Auswerteeinrichtung 23 berechnet dann eine geeigneten Messgröße M in Abhängigkeit von den ermittelten Messwerten G1 und G2 anhand einer vorbestimmten und in der Steuer-/Auswerteeinrichtung 23 gespeicherten geeigneten Beziehung M(G1,G2). Beispielsweise kann die Beziehung M=(G2-G20)/(G₁-G10) verwendet werden; es sind jedoch viele andere geeignete Beziehungen denkbar. In der Steuer-/Auswerteeinrichtung 23 ist für jedes zu messende Produkt eine aus Kalibrierungsmessungen gewonnene Kurve E(M) gespeichert, die einen eindeutigen Zusammenhang zwischen der zu bestimmenden Produkteigenschaft E und der Messgröße M angibt. Die aus Kalibrierungsmessungen gewonnenen Kurven E(M) erstrecken sich vorzugsweise über einen Feuchtebereich von 0% bis mindestens 20%, vorzugsweise bis mindestens 30%, weiter vorzugsweise bis mindestens 40%, beispielsweise bis 50% und mehr. Mittels der entsprechenden Kurve E(M) lässt sich aus der ermittelten Messgröße M sofort die gewünschte Produkteigenschaft E eindeutig berechnen.

In der Ausführungsform gemäß Fig. 4 wird zusätzlich zu den mit der Mikrowellendämpfung der ersten und zweiten Arbeitsmode zusammenhängenden Messwerten G1 und G2 die Frequenzverschiebung Dfi einer Arbeitsmode, vorzugsweise die Frequenzverschiebung Df1 der ersten Arbeitsmode, bestimmt und in der Bestimmung der Produkteigenschaft verwendet. Dies kann dadurch geschehen, dass die Messgröße M in zusätzlicher Abhängigkeit M(G1,G2,Dfi) von der Frequenzverschiebung Dfi bestimmt wird. Alternativ kann beispielsweise zunächst die Messgröße M(G1,G2) ohne Berücksichtigung der Frequenzverschiebung Dfi berechnet werden und abhängig von dem Ergebnis für M gegebenenfalls eine weitere Messgröße M(Gi,Dfi) berechnet werden, die dann für die Bestimmung der Produkteigenschaft verwendet wird. Beispielsweise kann die Messgröße M(G1,Df1) unter Umständen eine noch genauere Bestimmung der Produkteigenschaft bei relativ niedriger Produktfeuchte ermöglichen.

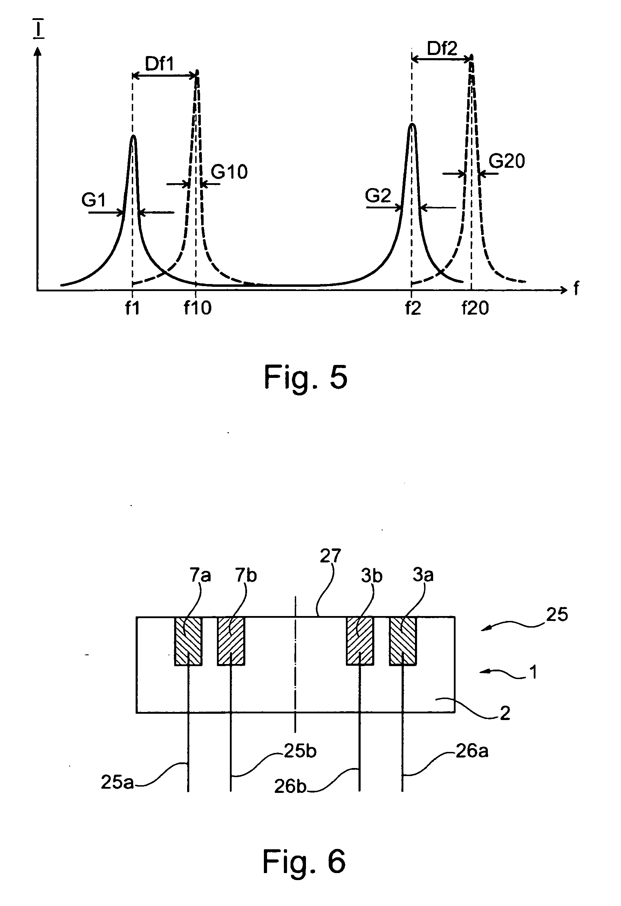

In der Ausführungsform gemäß Fig. 5 werden zusätzlich zu den mit der Mikrowellendämpfung der ersten und zweiten Arbeitsmode zusammenhängenden Messwerten G1 und G2 die Frequenzverschiebungen Df1 und Df2 der ersten und der zweiten Arbeitsmode bestimmt und in der Bestimmung der Produkteigenschaft verwendet. Dies kann dadurch geschehen, dass die Messgröße M in zusätzlicher Abhängigkeit M(G1,G2,Df1,Df2) von den Frequenzverschiebungen Df1 und Df2 bestimmt wird. Alternativ kann beispielsweise zunächst die Messgröße M(G1,G2) ohne Berücksichtigung der Frequenzverschiebungen Df1, Df2 berechnet werden und abhängig von dem Ergebnis für M gegebenenfalls eine weitere Messgröße M(G1,Df1) oder M(G2,DF2) berechnet werden, die dann für eine noch genauere Bestimmung der Produkteigenschaft verwendet werden kann. Eine weitere Alternative besteht darin, Messgrößen M1(G1,Df1) und M2(G2,DF2) zu bestimmen und daraus die Produkteigenschaft zu ermitteln, die für beide Messgrößen zu demselben Ergebnis führt.

Aus der obigen Beschreibung wird deutlich, dass unabhängig davon, ob im allgemeinen eine einheitliche Messgröße M(G1,G2) und daraus die Produkteigenschaft E(M(G1,G2)), oder zunächst zwei unabhängige Messgrößen M1(G1), M2(G2) und daraus die Produkteigenschaft E(M1(G1),M2(G2)) berechnet wird, in jedem Fall beide mit der Dämpfung zusammenhängenden Messwerte G1, G2 in die Ermittlung der zu bestimmenden Produkteigenschaft eingehen.

In dem Sensor 1 der Ausführungsform gemäß Fig. 1 und 2 werden beide Arbeitsmoden in demselben Resonator 7 erzeugt. Alternativ können auch separate Resonatoren 7a, 7b zur Erzeugung jeweils einer Arbeitsmode vorgesehen sein. Fig. 6 zeigt eine Ausführungsform mit zwei ringförmigen, insbesondere konzentrisch angeordneten Resonatoren 7a, 7b, die vorzugsweise jeweils mit einem dielektrischen Ring 3a, 3b ausgefüllt sind. Zweckmäßigerweise wird zur Erzeugung der zweiten Arbeitsmode ein auf eine bestimmte Eigenfrequenz des äußeren Resonators 7a abgestimmtes Mikrowellenfeld über eine Leitung 25a in den äußeren Resonator und zur Erzeugung der ersten Arbeitsmode ein auf eine entsprechende Eigenfrequenz des inneren Resonators 7b abgestimmtes Mikrowellenfeld über eine Leitung 25b in den inneren Resonator 7b eingekoppelt.

Wenn jede Arbeitsmode in einem separaten Resonator 7a, 7b erzeugt wird, kann jeder Resonator 7a, 7b optimal auf die Ausbreitung der jeweiligen Arbeitsmode abgestimmt sein, insbesondere durch Anpassung der Tiefe, Breite und gegebenenfalls Form der Nut 6.

Die obigen Ausführungen lassen sich ohne weiteres auf die Verwendung von mehr als zwei Arbeitsmoden mit jeweils unterschiedlichen Frequenzen zur Bestimmung der Produkteigenschaft übertragen.

Der Streufeldsensor 1 kann einen nicht gezeigten Temperaturfühler beispielsweise an der der Messseite 27 abgewandten Seite des Dielektrikums 3 aufweisen, dessen Signal von der Steuer-/Auswerteeinrichtung 23 zur Kompensation von Temperatureffekten genutzt werden kann.

Der Streufeldsensor 1 kann auch als Mikrostreifenleiter, beispielsweise gemäß EP 1 331 476 B1 mit oder ohne Referenzresonator, oder in anderer Weise geeignet ausgeführt sein.

In einer nicht gezeigten Ausführungsform kann die Sensoranordnung 25 eine Mehrzahl von Streufeldsensoren 1 aufweisen, beispielsweise zwei Streufeldsensoren 1 zur Erzeugung jeweils einer Arbeitsmode.

## Patentansprüche

1. Vorrichtung zur Messung einer Eigenschaft, insbesondere der Feuchte, Dichte und/oder Masse, eines Produkts, umfassend eine Mikrowellen-Streufeldsensoranordnung (35) mit mindestens einem Mikrowellen-Streufeldresonator (7) und einem außerhalb des Resonators (7) angeordneten Produktraum (9), wobei in dem Resonator (7) erzeugte Mikrowellen durch eine Resonatoröffnung in den Produktraum austreten, um mit einem in dem Produktraum 9 befindlichen Produkt (10) in Wechselwirkung zu treten, eine mit dem Resonator (7) leitend verbundenen Mikrowellenerzeugungseinrichtung (21) zur Erzeugung eines Mikrowellenfeldes in dem Resonatort (7), und eine Auswerteeinheit (20), die zur geeigneten Auswertung eines aus dem Resonator (7) ausgekoppelten Signals zur Ermittlung der Produkteigenschaft eingerichtet ist, wobei die Mikrowellenerzeugungseinrichtung (21) zur Anregung mindestens zweier resonanter, von dem Produkt (10) beeinflusster Arbeitsmoden mit unterschiedlichen Resonanzfrequenzen in dem mindestens einen Resonator (7) eingerichtet ist und die Auswerteeinrichtung (23) zur Ermittlung der Produkteigenschaft in Abhängigkeit mindestens eines mit der Mikrowellendämpfung der ersten Arbeitsmode zusammenhängenden Messwerts G1 und eines mit der Mikrowellendämpfung der zweiten Arbeitsmode zusammenhängenden Messwerts G2 eingerichtet ist, **dadurch gekennzeichnet, dass** die Resonanzfrequenz mindestens einer Arbeitsmode mindestens 3.5 GHz beträgt und die Arbeitsmoden unterschiedliche, unter 50 GHz liegende Resonanzfrequenzen mit einem Abstand von mindestens 1 GHz aufweisen.

2. Vorrichtung nach Anspruch 1, wobei in der Auswerteeinrichtung (23) ein aus Kalibrierungsmessungen gewonnener Zusammenhang zwischen einer zu bestimmenden Produkteigenschaft und mindestens einer Messgröße (M; M1, M2) über einen Feuchtebereich von 0% bis mindestens 20% gespeichert ist.

3. Vorrichtung nach Anspruch 1 oder 2, wobei in der Auswerteeinrichtung (23) ein aus Kalibrierungsmessungen gewonnener Zusammenhang zwischen einer zu bestimmenden Produkteigenschaft und mindestens einer Messgröße (M; M1, M2) über einen Feuchtebereich von 0% bis mindestens 30% gespeichert ist.

4. Vorrichtung nach einem der vorangehenden Ansprüche, wobei in der Auswerteeinrichtung (23) ein aus Kalibrierungsmessungen gewonnener Zusammenhang zwischen einer zu bestimmenden Produkteigenschaft und mindestens einer Messgröße (M; M1, M2) über einen Feuchtebereich von 0% bis mindestens 40% gespeichert ist.

5. Vorrichtung nach einem der vorangehenden Ansprüche, wobei die Arbeitsmoden unterschiedliche Resonanzfrequenzen mit einem Abstand von mindestens 3 GHz aufweisen.

6. Vorrichtung nach einem der vorangehenden Ansprüche, wobei die Resonanzfrequenz mindestens einer Arbeitsmode mindestens 5 GHz beträgt.

7. Vorrichtung nach einem der vorangehenden Ansprüche, wobei die Resonanzfrequenz einer Arbeitsmode ein ganzzahliges Vielfaches der Resonanzfrequenz der anderen Arbeitsmode beträgt.

8. Vorrichtung nach einem der vorangehenden Ansprüche, wobei die Auswerteeinrichtung (23) zur Bestimmung der Produkteigenschaft in zusätzlicher Abhängigkeit von der Frequenzverschiebung Df1 einer Arbeitsmode eingerichtet ist.

9. Vorrichtung nach einem der vorangehenden Ansprüche, wobei die Auswerteeinrichtung (23) zur Bestimmung der produkteigenschaft in zusätzlicher Abhängigkeit von der Frequenzverschiebung Df1 der ersten Arbeitsmode und der Frequenzverschiebung Df2 der zweiten Arbeitsmode eingerichtet ist.

10. Vorrichtung nach einem der vorangehenden Ansprüche, wobei die Resonanzfrequenzen der Arbeitsmoden unter 30 GHz liegen.

11. Vorrichtung nach einem der vorangehenden Ansprüche, wobei der mindestens eine Mikrowellenresonator (7) mit einem Dielektrikum gefüllt ist.

12. Vorrichtung zum Behandeln, insbesondere zum Trocknen eines Produkts (40), umfassend eine Messvorrichtung (24) nach einem der vorangehenden Ansprüche zur Steuerung und/oder Regelung der Produktbehandlungsvorrichtung in Abhängigkeit des von der Messvorrichtung (24) bereitgestellten Messsignals.

13. Verfahren zur Messung einer Eigenschaft, insbesondere der Feuchte, Dichte und/oder Masse, eines Produkts (10), mittels einer Mikrowellen-Streufeldsensoranordnung (10) mit mindestens einem Mikrowellen-Streufeldresonator (7), umfassend die Schritte Erzeugung eines Mikrowellenfeldes in dem Resonator (7), Anregung mindestens zweier resonanter, von dem Produkt beeinflusster Arbeitsmoden mit unterschiedlichen Resonanzfrequenzen in dem mindestens einen Resonator (7), und Auswertung eines aus dem Resonator (7) ausgekoppelten Signals zur Ermittlung der Produkteigenschaft, wobei die Produkteigenschaft in Abhängigkeit mindestens eines mit der Mikrowellendämpfung der ersten Arbeitsmode zusammenhängenden Messwerts G1 und eines mit der Mikrowellendämpfung der zweiten Arbeitsmode zusammenhängenden Messwerts G2 ermittelt wird, **dadurch gekennzeichnet, dass** die Resonanzfrequenz mindestens einer Arbeitsmode mindestens 3.5 GHz beträgt und die Arbeitsmoden unterschiedliche, unter 50 GHz liegende Resonanzfrequenzen mit einem Abstand von mindestens 1 GHz aufweisen.

## Claims

1. Device for measuring a property, in particular the moisture, density and/or mass of a product (10), including a microwave stray field sensor arrangement (25) comprising at least one microwave stray field resonator (7) and a product chamber (9) located outside the resonator (7), wherein microwaves generated in the resonator (7) exit through a resonator opening into the product chamber (9) to interact with a product (10) located in the product chamber (9), a microwave generating device (21) having a conductive connection with the resonator (7) for generating a microwave field in the resonator (7), and an evaluation unit (20) which is adapted to properly evaluate a signal coupled out of the resonator (7) for determining the product property, wherein the microwave generating device (21) is adapted to excite at least two resonant working modes influenced by the product (10) with different resonance frequencies in the at least one resonator (7), and the evaluation device (23) is adapted to determine the product property depending on at least one measured value G1 associated with the microwave attenuation of the first working mode and a measured value G2 associated with the microwave attenuation of the second working mode, **characterized in that** the resonance frequency of at least one working mode is at least 3.5 GHz and that the working modes have different resonance frequencies below 50 GHz with an at least 1 GHz difference.

2. Device according to claim 1, wherein a relation between a product property to be determined and at least one measured variable (M; M1, M2) over a moisture range of 0 % up to at least 20 % obtained from calibration measurements is stored in the evaluation device (23).

3. Device according to claim 1 or 2, wherein a relation between a product property to be determined and at least one measured variable (M; M1, M2) over a moisture range of 0 % up to at least 30 % obtained from calibration measurements is stored in the evaluation device (23).

4. Device according to any one of the preceding claims,
wherein a relation between a product property to be determined and at least one measured variable (M; M1, M2) over a moisture range of 0 % up to at least 40 % obtained from calibration measurements is stored in the evaluation device (23).

5. Device according to any one of the preceding claims,
wherein the working modes have different resonance frequencies with an at least 3 GHz difference.

6. Device according to any one of the preceding claims,
wherein the resonance frequency of at least one working mode is at least 5 GHz.

7. Device according to any one of the preceding claims,
wherein the resonance frequency of one working mode is an integer multiple of the resonance frequency of the other working mode.

8. Device according to any one of the preceding claims,
wherein the evaluation device (23) is adapted to determine the product property additionally depending on the frequency shift Df1 of one working mode.

9. Device according to any one of the preceding claims,
wherein the evaluation device (23) is adapted to determine the product property additionally depending on the frequency shift Df1 of the first working mode and the frequency shift Df2 of the second working mode.

10. Device according to any one of the preceding claims,
wherein the resonance frequencies of the working modes are below 30 GHz.

11. Device according to any one of the preceding claims,
wherein the at least one microwave resonator (7) is filled with a dielectric medium.

12. Device for treating, in particular for drying a product (10), including a measuring device (24) according to any one of the preceding claims for controlling and/or regulating the product treating device depending on the measured signal provided by the measuring device (24).

13. Method for measuring a property, in particular the moisture, density and/or mass of a product (10), using a microwave stray field sensor arrangement (25) comprising at least one microwave stray field resonator (7), including the steps of generating a microwave field in the resonator (7), exciting at least two resonant working modes influenced by the product with different resonance frequencies in the at least one resonator (7), and evaluating a signal coupled out of the resonator (7) for determining the product property, wherein the product property is determined depending on at least one measured value G1 associated with the microwave attenuation of the first working mode and a measured value G2 associated with the microwave attenuation of the second working mode, **characterized in that** the resonance frequency of at least one working mode is at least 3.5 GHz and that the working modes have different resonance frequencies below 50 GHz with an at least 1 GHz difference.

## Revendications

1. Dispositif de mesure d'une propriété, en particulier de la moiteur, de la densité et/ou de la masse d'un produit (10), comprenant un agencement de capteur de champ de dispersion à micro-ondes (25) avec au moins un résonateur de champ de dispersion à micro-ondes (7) et une chambre à produits (9) disposée à l'extérieur du résonateur (7), des micro-ondes produits dans le résonateur (7) sortant par une ouverture du résonateur dans la chambre à produits (9) pour entrer en interaction avec un produit (10) se trouvant dans la chambre à produits (9), un dispositif de génération de micro-ondes (21) relié de manière conductrice avec le résonateur (7) pour générer un champ de micro-ondes dans le résonateur (7), et une unité d'évaluation (20), qui est conçue pour évaluer de manière adaptée un signal extrait du résonateur (7) pour déterminer la propriété de produit, le dispositif de génération de micro-ondes (21) étant conçu pour l'excitation d'au moins deux modes fonctionnels résonants influencés par le produit (10) avec différentes fréquences de résonance dans ledit au moins un résonateur (7) et le dispositif d'évaluation (23) étant conçu pour déterminer la propriété de produit en fonction d'au moins une valeur de mesure G1 liée avec l'atténuation des micro-ondes du premier mode fonctionnel et d'une valeur de mesure G2 liée avec l'atténuation des micro-ondes du second mode fonctionnel, **caractérisé par le fait que** la fréquence de résonance d'au moins un mode fonctionnel s'élève à au moins 3,5 GHz et les modes fonctionnels présentent différentes fréquences de résonance étant inférieures à 50 GHz avec un écart minimum de 1 GHz.

2. Dispositif selon la revendication 1, un rapport obtenu à partir de mesures de calibrage entre une propriété de produit devant être définie et au moins une variable de mesure (M ; M1, M2) sur une zone de moiteur de 0 % jusqu'à au moins 20 % étant mémorisé dans le dispositif d'évaluation (23).

3. Dispositif selon la revendication 1 ou 2, un rapport obtenu à partir de mesures de calibrage entre une propriété de produit devant être définie et au moins une variable de mesure (M ; M1, M2) sur une zone de moiteur de 0 % jusqu'à au moins 30 % étant mémorisé dans le dispositif d'évaluation (23).

4. Dispositif selon l'une quelconque des revendications précédentes, un rapport obtenu à partir de mesures de calibrage entre une propriété de produit devant être définie et au moins une variable de mesure (M ; M1, M2) sur une zone de moiteur de 0 % jusqu'à au moins 40 % étant mémorisé dans le dispositif d'évaluation (23).

5. Dispositif selon l'une quelconque des revendications précédentes, les modes fonctionnels présentant différentes fréquences de résonance avec un écart minimum de 3 GHz.

6. Dispositif selon l'une quelconque des revendications précédentes, la fréquence de résonance d'au moins un mode fonctionnel s'élevant à au moins 5 GHz.

7. Dispositif selon l'une quelconque des revendications précédentes, la fréquence de résonance d'un mode fonctionnel s'élevant à un multiple entier de la fréquence de résonance de l'autre mode fonctionnel.

8. Dispositif selon l'une quelconque des revendications précédentes, le dispositif d'évaluation (23) étant conçu pour déterminer la propriété de produit en fonction supplémentaire du déplacement de fréquences Df1 d'un mode fonctionnel.

9. Dispositif selon l'une quelconque des revendications précédentes, le dispositif d'évaluation (23) étant conçu pour déterminer la propriété de produit en fonction supplémentaire du déplacement de fréquences Df1 du premier mode fonctionnel et du déplacement de fréquences Df2 du second mode fonctionnel.

10. Dispositif selon l'une quelconque des revendications précédentes, les fréquences de résonance des modes fonctionnels étant inférieures à 30 GHz.

11. Dispositif selon l'une quelconque des revendications précédentes, ledit au moins un résonateur à micro-ondes (7) étant rempli d'un diélectrique.

12. Dispositif de traitement, en particulier de séchage d'un produit (10), comprenant un dispositif de mesure (24) selon l'une des revendications précédentes destiné à la commande et/ou au réglage du dispositif de traitement du produit en fonction du signal de mesure fourni par le dispositif de mesure (24).

13. Procédé de mesure d'une propriété, en particulier de la moiteur, de la densité et/ou de la masse d'un produit (10), au moyen d'un agencement de capteur de champ de dispersion à micro-ondes (25) avec au moins un résonateur de champ de dispersion à micro-ondes (7), comprenant les étapes de génération d'un champ de micro-ondes dans le résonateur (7), excitation d'au moins deux modes fonctionnels résonants influencés par le produit avec différentes fréquences de résonance dans ledit au moins un résonateur (7), et évaluation d'un signal extrait du résonateur (7) pour déterminer la propriété de produit, la propriété de produit étant déterminée en fonction d'au moins une valeur de mesure G1 liée avec l'atténuation des micro-ondes du premier mode fonctionnel et d'une valeur de mesure G2 liée avec l'atténuation des micro-ondes du second mode fonctionnel, **caractérisé par le fait que** la fréquence de résonance d'au moins un mode fonctionnel s'élève à au moins 3,5 GHz et les modes fonctionnels présentent différentes fréquences de résonance étant inférieures à 50 GHz avec un écart minimum de 1 GHz.
